# EUROPEAN PATENT SPECIFICATION

(11) **EP 2 153 555 B1**
(45) Date of publication and mention of the grant of the patent: **18.09.2013**
(21) Application number: 08827048.3
(22) Date of filing: 30.05.2008
(51) Int. Cl.: H04B 10/2575

(54) **FREQUENCY MODULATED BURST MODE OPTICAL SYSTEM**
FREQUENZMODULIERTES OPTISCHES VERSTÄRKUNGSMODUS-SYSTEM
SYSTÈME OPTIQUE EN MODE RAFALE À MODULATION DE FRÉQUENCE

(30) Priority: 13.06.2007 US 762397
(43) Date of publication of application: 17.02.2010
(73) Proprietor: Scientific-Atlanta, LLC, Lawrenceville, GA 30044 (US)
(72) Inventor: WEST, Lamar, E., Jr., Maysville, Georgia 30558 (US)
(74) Representative: Mathys & Squire LLP
(86) International application number: PCT/US2008/065184
(87) International publication number: WO 2009/020691

(56) References cited:
- WO-A-03/005611
- WO-A-2004/014010
- WO-A-2005/112309
- US-A1- 2002 154 371
- US-A1- 2003 121 056
- KIKUSHIMA KOJI ET AL: "Simultaneous optical transmission of AM-VSB/64-QAM/FM/TC8PSK/QPSK multi-channel television signals by super-wideband FM and BS/CS-RF conversion techniques" COMPENDEX,, vol. E89-B, no. 11, 1 November 2006 (2006-11-01), pages 3008-3020, XP002486906
- JUIN-HUNG CHEN ET AL: "FM Subcarrier Fiber Optical Transmission System Design and Its Application in Next-Generation Wireless Access" JOURNAL OF LIGHTWAVE TECHNOLOGY, IEEE SERVICE CENTER, NEW YORK, NY, US, vol. 16, no. 7, 1 July 1998 (1998-07-01), XP011029166 ISSN: 0733-8724

## Description

### TECHNICAL FIELD

The present invention is generally related to a communications system and, more particularly, is related to systems and methods for transmitting combined reverse optical signals from a plurality of frequency modulated burst mode transmitters.

### BACKGROUND OF THE INVENTION

Hybrid fiber/coaxial (HFC) communications systems transmit signals in a forward and reverse path between a headend and a plurality of subscribers. In the reverse path, a coaxial cable feeder portion connects the subscriber equipment (e.g., cable modems, digital set-top boxes) with an optical node, which conventionally converts the radio frequency (RF) signals received from the subscriber equipment to optical signals, that sits at the input of an optical link. Subsequently, the optical link connects the reverse path from the optical node to a hub or headend where they are processed accordingly.

Lasers used for reverse path signaling in the conventional approach to HFC network design are intensity modulated by the radio frequency (RF) electrical signals that contain information for transmission in the reverse path. Ideally the light intensity from these lasers is proportional to the electrical signals. The light is launched down a reverse path optical fiber and is attenuated by an amount that is a function of the length of that fiber. RF output power levels from conventional optical receivers are a function of the received optical input power. Variations in the length of optical fibers throughout the HFC network result in variations in the received optical power at the input of each optical receiver. Consequently, RF output power is manually adjusted at each optical receiver to compensate for variations in optical loss from link to link.

Furthermore, due to current limitations, a single optical transmitter is coupled via fiber to a single optical receiver. Unlike electrical devices, such as taps and amplifiers, that combine and split electrical signals, optical signals cannot be combined while still preserving the information since the information is carried on a single wavelength. Therefore, conventionally, wave division multiplexers are used to change the wavelengths of each optical transmitter before they are combined, and then at the receiving end, the wavelengths are demultiplexed and changed back to the original single wavelength prior to being received at an optical receiver. Regardless, there still remains a one to one correlation of an optical transmitter to an optical receiver. Therefore, there is a need to address the deficiencies and/or inadequacies of reverse optical systems.

US 2002/154371 describes a burst-mode analogue transmitter for receiving reverse electrical signals and providing reverse optical signals in a communications network.

WO 2005/112309 describes a radio frequency burst-mode optical to electrical converter that detects the presence of RF bursts from user terminals, and only activates a laser for upstream transmission when a burst is present.

WO 03/005611 describes an optical network in which active combiners are used to combine upstream optical signals onto a single optical fiber.

US 2003/121056 describes an optical network including intelligent dynamic switches that only transmit a signal when a desired signal is detected to reduce the ingress of noise into the network.

WO 2004/014010 describes a method for detecting the resence of a carrier signal transmitted in a reverse path. The detection of the carrier signal can then used to control further transmission of reverse signals.

Kikushima Koji et al: "Simultaneous optical transmission of AM-VSB/64-QAM /FM /TC8PSK/QPSK multi-channel television signals by super-wideband FM and BS/CS-RF conversion techniques" describes a scheme for multiplexing downstream cable television broadcasts and satellite broadcasts into a single optical fiber transmission.

Juin-Hung Chen et al: "FM Subcarrier Fiber Optical Transmission System Design and Its Application in Next-Generation Wireless Access" describes a scheme for transmitting a modulated RF signal between nodes in a GSM netswork via fiber optics.

### BRIEF DESCRIPTION OF THE DRAWINGS

The invention can be better understood with reference to the following drawings. The components in the drawings are not necessarily to scale, emphasis instead being placed upon clearly illustrating the principles of the present invention. Moreover, in the drawings, like reference numerals designate corresponding parts throughout the several views.
FIG. 1 is an abridged block diagram of a communications system that is suitable for use in implementing the present invention.
FIG. 2 illustrates one link in the reverse direction of the broadband communications system of FIG. 1.
FIG. 3 is a block diagram of a first embodiment of a frequency modulated burst mode optical transmitter in accordance with the present invention.
FIG. 4 is a block diagram of a frequency modulated optical receiver that is suitable for use with the frequency modulated burst mode transmitter of FIG. 3.
FIG. 5 is a block diagram of a second embodiment of a frequency modulated burst mode optical transmitter in accordance with the present invention.
FIG. 6 is a block diagram of an optical system illustrating a one to one correlation of an optical transmitter to an optical receiver.
FIG. 7 is a block diagram of an optical system in accordance with the present invention illustrating a plurality of optical transmitters that transmit to a common, or single, optical receiver.

### DETAILED DESCRIPTION OF THE PREFERRED EMBODIMENTS

The preferred embodiments of the invention now will be described more fully hereinafter with reference to the accompanying drawings, in which preferred embodiments of the invention are shown. The invention may, however, be embodied in many different forms and should not be construed as limited to the embodiments set forth herein; rather, these embodiments are provided so that this disclosure will be thorough and complete, and will fully convey the scope of the invention to those skilled in the art. Furthermore, all "examples" given herein are intended to be non-limiting.

The present invention is directed towards a frequency modulated burst mode optical system. A plurality of optical transmitters each receive reverse electrical signals typically within a frequency range from 5 MHz to 45 MHz, 5 MHz to 108 MHz, 5 MHz to 174 MHz, or 5 MHz to 88 MHz, depending upon the application. Each optical transmitter then uses the reverse signals to frequency modulate an RF carrier signal. More specifically, the optical transmitter frequency modulates an RF carrier signal, which is included in the reverse electrical signals at a second frequency, e.g., at 1.21 GHz. The frequency modulated electrical signal is then used to intensity modulate an optical laser. In this manner, since the information in the carrier signal is carried in the frequency domain as opposed to the amplitude of the optical signal, longer fiber distances can be used due to the robust nature of the frequency modulation modulated signal. Furthermore, the optical transmitter of the present invention includes a burst mode circuit, which detects the presence of a carrier signal present in the reverse electrical signals. Conventional optical transmitters that do not include the burst mode circuit of the present invention typically bias the optical laser, and the laser transports optical signals at all times regardless of the presence of a carrier signal. In conjunction with frequency modulating the carrier signals and the burst mode circuit, the optical laser does not need to be biased on continuously and can be turned on and of in the presence of a carrier signal. Accordingly, only when a carrier signal is detected does the optical transmitter transport optical signals to an optical receiver located further upstream. Notably, since the optical transmitter of the present invention only transmits optical signals when a reverse carrier signal is present, optical outputs from a plurality of optical transmitters can be combined where each optical signal has a common, or single, wavelength. One optical receiver then receives the plurality of optical outputs from each of the optical transmitters and processes them accordingly. Advantageously, since there is no longer a one-to-one correlation of optical transmitter to optical receiver, less optical receivers are required in the optical system. For example, there may only be one optical receiver required in a hub that services several optical transmitters.

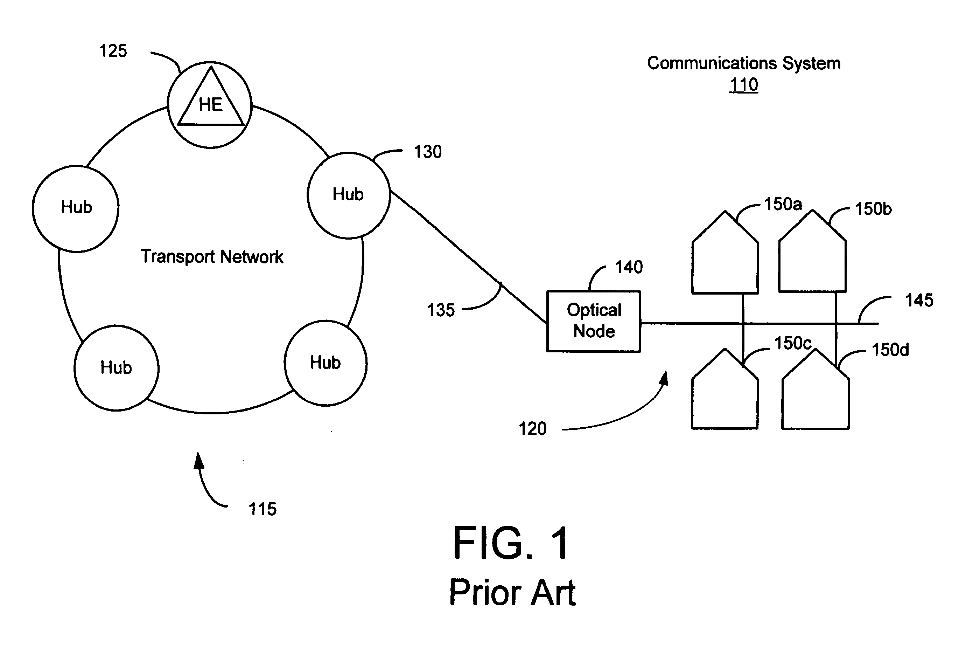

FIG. 1 is an abridged block diagram of a communications system 110 that is suitable for use in implementing the present invention. Typically, a communications system 110 includes a transport network 115 and a transmission network 120. The transport network 115, which is fiber optic cable, connects a headend 125 and hubs 130 for generating, preparing, and routing programs and other optical packets over longer distances; whereas a transmission network 120, which is coaxial cable, generally routes electrical packets over shorter distances. Programs and other information packets received, generated, and/or processed by headend equipment is either broadcasted to all subscribers in the system 110 or alternatively, the programs can be selectively delivered to one or more subscribers. Fiber optic cable 135 connects the transport network 115 to an optical node(s) 140 in order to convert the packets from optical packets into electrical packets. Thereafter, coaxial cable 145 routes the packets to one or more subscriber premises 150a-d.

In the reverse, or upstream, direction, subscriber premises equipment, such as set-top boxes or cable modems, generate reverse electrical signals. The optical node 140, which includes an optical transmitter, converts the reverse electrical signals into optical signals for further routing to the hubs 130. The hubs 130 then route the optical signals to the headend 125 for further processing.

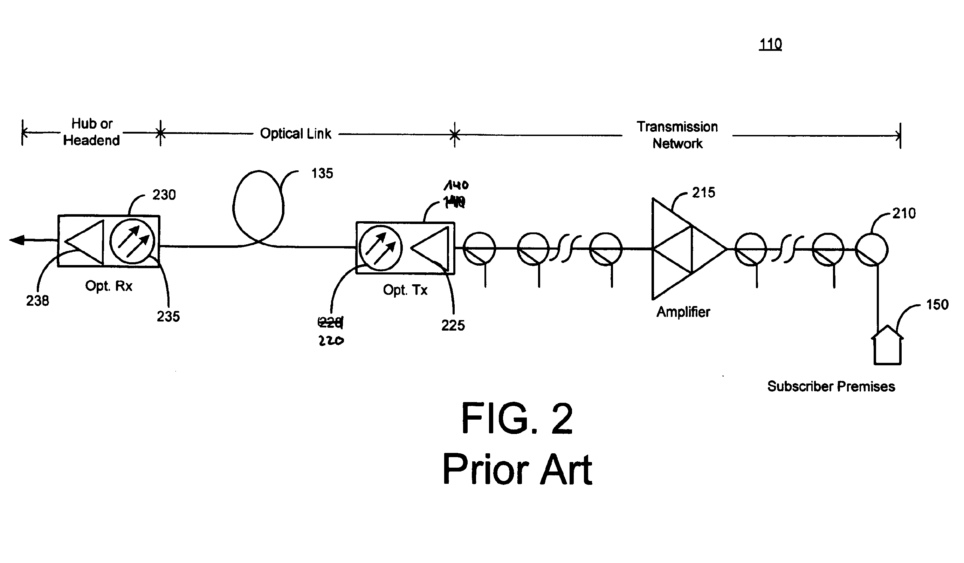

FIG. 2 illustrates one link in the reverse direction of the broadband communications system of FIG. 1. A tap 210 receives the reverse electrical signals from a subscriber 150 and combines the signals with other reverse electrical signals being transmitted on that path. An amplifier 215 amplifies the combined electrical signals as necessary. At the demarcation point between the transmission network and the optical links is the optical node 140, which includes optical transmitter 220. Reverse electronics 225, such as amplifiers and other configuration modules, prepare the signals for conversion into optical signals by laser 228. The optical signals are then transported across optical fiber 135 to an optical receiver 230, which is included in either the headend or the hub 130. The optical receiver 230 converts the optical signals back into electrical signals via a photodiode 235 and reverse electronics 238 further condition the signal as required. The reverse electrical signals, which have been combined from various subscribers 150a-d, are then provided to headend equipment. As mentioned, however, the optical signals are susceptible to signal attenuation, in the case of analog optical signal transport, or require expensive digital electronics in order to convert the optical signals into a digital optical signal. The present invention, in contrast, transports frequency modulated optical signals where the information of the reverse signals is carried in the frequency, so that the long fiber can be used without incurring losses in the signal.

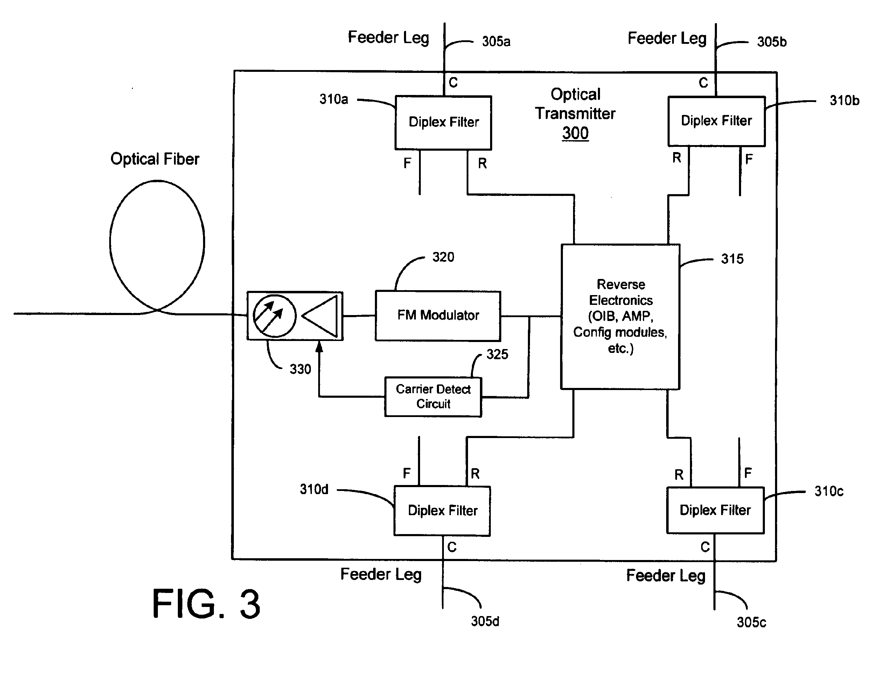

FIG. 3 is a block diagram of a first embodiment of a frequency modulated burst mode optical transmitter in accordance with the present invention. Feeder legs 305a-d receive reverse electrical signals from subscribers located on four different paths. Any number of feeder legs can be used in the optical transmitter 300. Diplex filters 310a-d then isolate the reverse electrical signals from the forward, or downstream, signals. Reverse electronics 315 then amplify, combine, and configure the signals in a known manner. Subsequently, a frequency modulation (FM) modulator 320 uses the reverse electrical signals to modulate an RF carrier signal. Most of the time, reverse electrical signals are received from the feeder legs regardless of the presence of a carrier signal, which carries the reverse information. The electrical signals are typically noise and ingress signals. Therefore, a carrier detect circuit 325 detects the presence of any carrier signals in the reverse electrical signals. The carrier detect circuit 325 controls laser 330 and/or FM modulator 320 according to the presence of detected carrier signals. More specifically, when a carrier signal is detected, the carrier detect circuit 325 turns the laser 330 on, and then the laser is intensity modulated with, for example, the 1.21 GHz RF carrier signal that has been FM modulated with the reverse signals. When a carrier signal is not detected, the laser 330 is turned off, thereby not allowing any frequency modulated electrical signals to be transmitted further upstream. Further information regarding frequency modulated optical signals can be found in copending U. S. patent application serial no. 11/683,640 entitled "Reverse Path Optical Link using Frequency Modulation," filed on March 8, 2007.

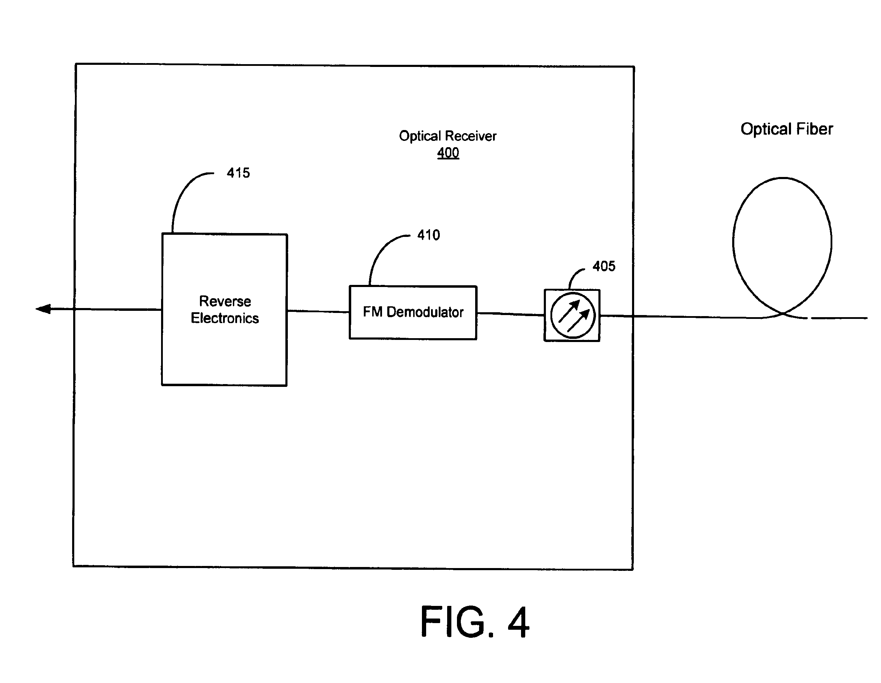

FIG. 4 is a block diagram of a frequency modulated optical receiver 400 that is suitable for use with the frequency modulated burst mode transmitter of FIG. 3. The reverse optical receiver 400, which is coupled to the reverse optical transmitter 300, receives the optical signal that is present only when reverse signals in the reverse band are present at the input to the carrier detect circuit 320 in the burst mode optical transmitter. A photodiode 405 converts the optical signals back into electrical signals. Subsequently, a frequency modulation demodulator 410 demodulates the electrical signals. Reverse electronics 415 further condition the signal prior to further transmission to headend equipment.

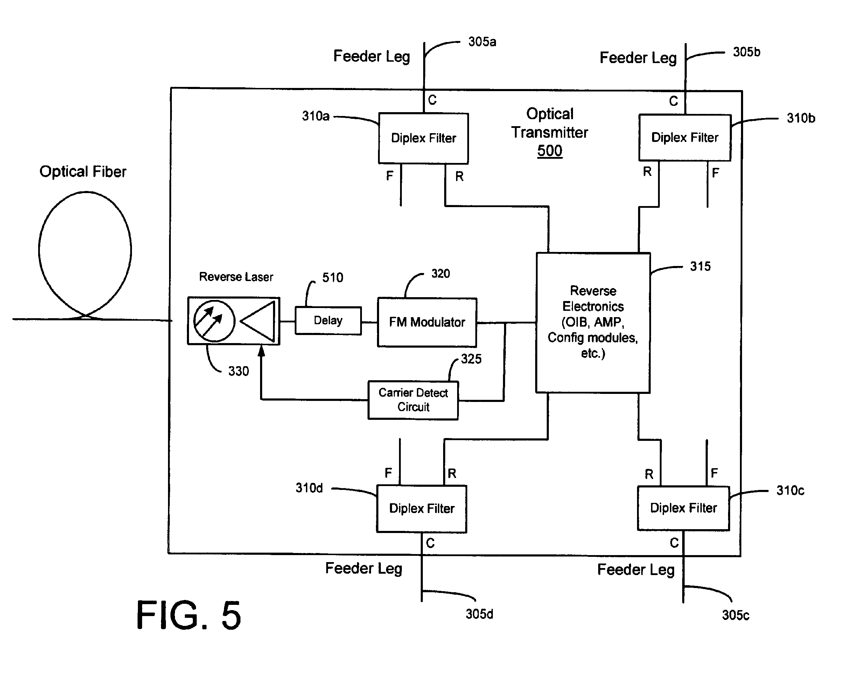

FIG. 5 is a block diagram of an arrangement of a frequency modulated burst mode optical transmitter related to the present invention. This arrangement includes a delay circuit 505. Accordingly, the delay circuit 505 delays the frequency modulated electrical signals by an appropriate time in order to allow the carrier detect circuit 325 to detect the presence of a carrier signal and then turn on the laser 330. In this manner, reverse signals are not lost due to any time delays by the carrier detect circuit.

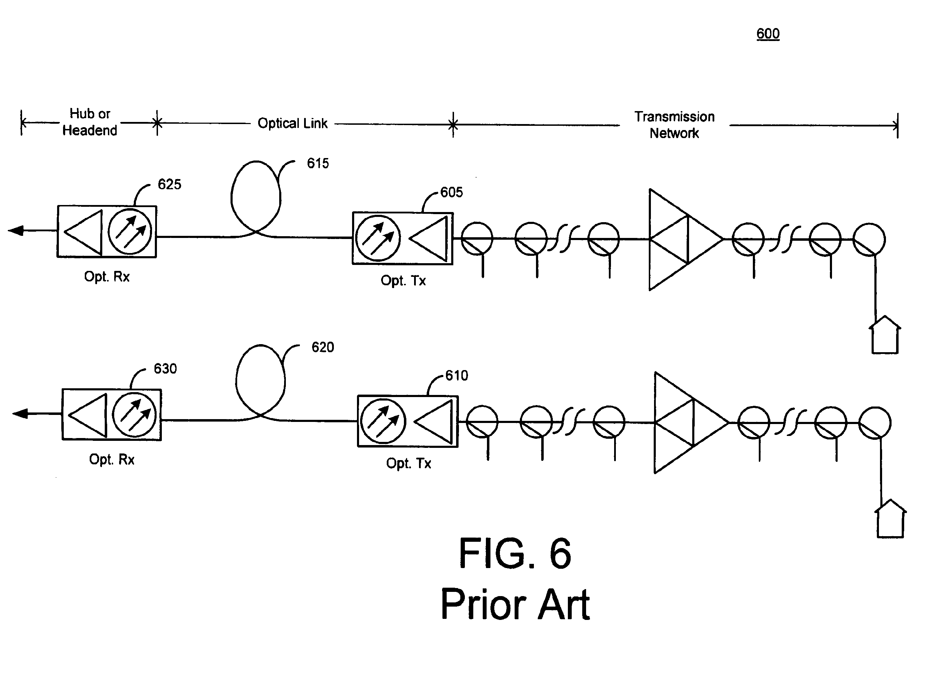

FIG. 6 is a block diagram of an optical system 600 illustrating a one-to-one correlation of an optical transmitter to an optical receiver. As mentioned, due to conventional optical transmitters 605, 610 transmitting reverse signals at all times, there is a requirement for a single optical fiber 615, 620 coupled to a single optical receiver 625, 630 so that signals are not lost or corrupted by other optical signals along the optical fiber. In some applications, optical signals from a plurality of optical transmitters can be combined on a single optical fiber. Specifically, a wave division multiplexer (not shown) at the output of the plurality of optical transmitters multiplexes each optical signal at a different wavelength (i.e., not a common, or single, wavelength such as the present invention). The combined wavelengths are then transmitted on a single fiber and then received at a wave division demultiplexer. Subsequently, the demultiplexer separates the signals and returns each of them back to their original wavelength. An optical receiver then receives each of the optical signals. Again, however, there is a requirement for the one-to-one correlation between the optical transmitter and receiver.

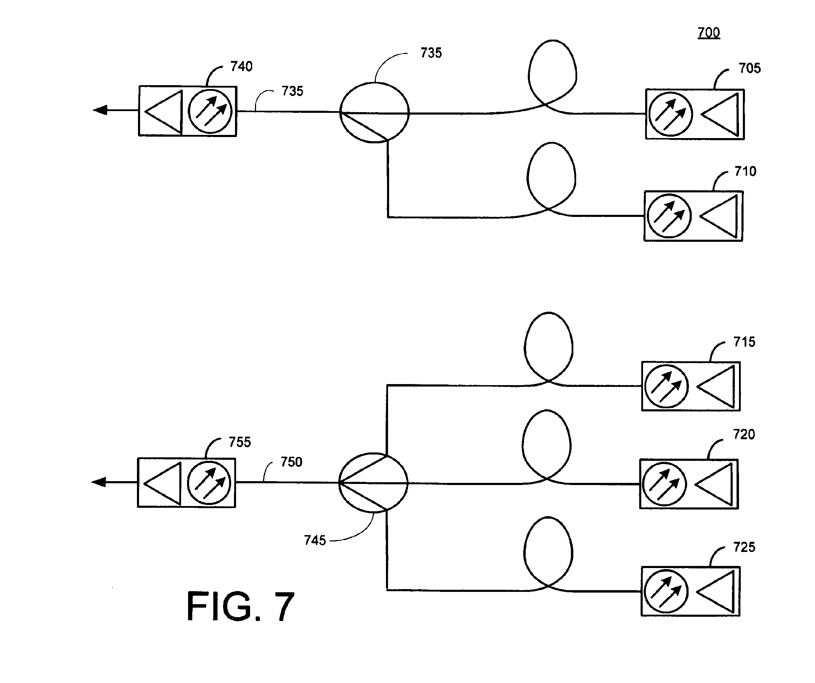

FIG. 7 is a block diagram of an optical system in accordance with the present invention illustrating a plurality of optical transmitters that transmit to a common, or single, optical receiver. More specifically, optical system 700 illustrates, by way of example, optical transmitters 705, 710, 715, 720, 725, 730 that each include a burst mode carrier detect circuit 325 (FIG. 3) and a frequency modulation modulator 320 (FIG. 3). Accordingly, each frequency modulated optical transmitter 705-730 transmits optical signals only when a carrier signal is present in the reverse electrical signals. Since optical signals are transmitted only at this time, the chances of signal collisions are low as compared to when conventional optical transmitters transmit reverse signals at all times. A passive combiner 730 combines the optical signals and transmits the combined optical signals on a single fiber 735. Advantageously, expensive wave division multiplexers and demultiplexers are no longer required. A single frequency modulated optical receiver 740 then receives the combined optical signals and processes them as explained hereinabove in reference to FIG. 4.

Many arrangements can be made to the optical system 700 according to the number of active subscribers 150. For example, frequency modulated optical transmitters 715, 720, 725 may be passively combined by combiner 745 and transmitted on a single optical fiber 750. Frequency modulated optical receiver 755 may then receive the combined signals from three optical transmitters as opposed to the frequency modulated optical receiver 740, which receives the combined signals from two optical transmitters 705, 710. Additionally, the frequency modulated optical receivers 740, 755 may be included in a single hub in the system or in different hubs depending upon the application.

Accordingly, systems and methods have been described that enable a frequency modulated burst mode optical system. It should be emphasized that the above-described embodiments of the present invention, particularly, any "preferred" embodiments, are merely possible examples of implementations, merely set forth for a clear understanding of the principles of the invention. Many variations and modifications may be made to the above-described embodiment(s) of the invention without departing substantially from the scope of this disclosure, as defined by the following claims.

## Claims

1. A method for transmitting burst mode optical signals from a plurality of frequency modulated optical transmitters (300), the method comprising the steps of:
at each frequency modulated optical transmitter (300), detecting a carrier signal within reverse electrical signals via a carrier detect circuit (325);
frequency modulating the reverse electrical signals via a frequency modulation modulator (320);
in the presence of a detected carrier signal, intensity modulating the frequency modulated electrical signals with an optical laser (330) to provide optical signals; and
transmitting the optical signals on an optical fiber;
at a passive combiner (730), combining the optical signals from each of the frequency modulated optical transmitters (300); and
transmitting the combined optical signals on a single fiber (735), where each of the optical signals have a common wavelength.

2. The method of claim 1, further comprising the step of receiving the combined optical signals at a single frequency modulated optical receiver (400).

3. The method of claim 2, further comprising the steps of:
at the frequency modulated optical receiver (400), converting the combined optical signals into a combined frequency modulated electrical signal; and
demodulating the combined frequency modulated electrical signal.

4. The method of claim 1, further comprising the step of, without the presence of a carrier signal, preventing the frequency modulated reverse electrical signals from being intensity modulated into optical signals.

5. The method of claim 1, further comprising the step of controlling the optical laser (330) via the carrier detect circuit (325).

6. The method of claim 1, further comprising the step of controlling the frequency modulation modulator via the carrier detect circuit (325).

7. The method of claim 1, wherein the reverse electrical signals are frequency modulated with a predetermined GHz signal.

8. A system (700) for transmitting burst mode optical signals, the system including a plurality of frequency modulated optical transmitters (300), the system comprising:
at each frequency modulated optical transmitter (300), a carrier detect circuit (325) for detecting a carrier signal transmitted within reverse electrical signals;
a frequency modulation modulator (320) for frequency modulating the reverse electrical signals; and
an optical laser (330) for intensity modulating the frequency modulated electrical signals, wherein the optical laser (330) only intensity modulates the frequency modulated electrical signals when a carrier signal is detected;
a passive combiner (730) for receiving the optical signals from each of the plurality of frequency modulated optical transmitters (300); and
a single optical fiber (735) for transmitting the combined optical signals.

9. The system of claim 8, wherein the combined optical signals transmitted on the single fiber (735) each have a common wavelength.

10. The system of claim 8, further comprising:
a frequency modulated optical receiver (400) for receiving the combined optical signals, wherein the combined optical signals have a common wavelength.

11. The system of claim 10, wherein the frequency modulated optical receiver (400) comprises:
a photodiode (405) for converting the combined optical signals back into frequency modulated electrical signals; and
a frequency modulation demodulator (410) for demodulating the frequency modulated electrical signals.

12. The system of claim 8, wherein the carrier detect circuit (325) controls the optical laser (330) depending upon the presence of a detected carrier signal.

13. The system of claim 8, wherein the carrier detect circuit (325) controls the frequency modulation modulator (320) depending upon the presence of a detected carrier signal.

14. A system for transmitting and receiving burst mode optical signals, the system comprising a plurality of hubs, the system comprising:
at each hub, at least one frequency modulated optical receiver (400) for receiving a combined optical signal, the at least one frequency modulated optical receiver (400) comprising:
a photodiode (405) for converting the combined optical signal into a frequency modulated electrical signal; and
a frequency modulation demodulator (410) for demodulating the frequency modulated electrical signal;
a plurality of frequency modulated optical transmitters (300) coupled to one of the plurality of hubs, each frequency modulated optical transmitter comprising:
a carrier detect circuit (325) for detecting a carrier signal transmitted within reverse electrical signals;
a frequency modulation modulator (320) for frequency modulating the reverse electrical signals; and
an optical laser (330) for intensity modulating the frequency modulated electrical signals, wherein the optical laser (330) only intensity modulates the frequency modulated electrical signals when a carrier signal is detected; and
an optical combiner (730) coupled between the plurality of frequency modulated optical transmitters (300) and one of the plurality of hubs, the optical combiner for receiving the optical signals from each of the plurality of frequency modulated transmitters (300) and passively combining the optical signals for transmission on a single fiber (735), wherein the combined optical signals have a common wavelength.

15. The system of claim 14, wherein, without the presence of a carrier signal, the frequency modulated electrical signals are prevented from being intensity modulated into optical signals.

16. The system of claim 14, wherein the carrier detect circuit (325) controls the optical laser (330).

17. The system of claim 14, wherein, without the presence of a carrier signal, the reverse electrical signals are prevented from being frequency modulated.

18. The system of claim 14, wherein the carrier detect circuit (325) controls the frequency modulation modulator (320).

19. The system of claim 14, wherein the reverse electrical signals are frequency modulated with a predetermined GHz signal.

20. The system of claim 14, wherein the reverse electrical signals are transmitted in a predetermined reverse frequency range.

## Patentansprüche

1. Verfahren zum Senden von optischen Signalen im Signalblockmodus von einer Vielzahl von frequenzmodulierten optischen Sendern (300), wobei das Verfahren folgende Schritte umfasst:
Erkennen eines Trägersignals in umgekehrten elektrischen Signalen über einen Trägererfassungskreis (325) bei jedem frequenzmodulierten optischen Sender (300);
Frequenzmodulation der umgekehrten elektrischen Signale mittels eines Frequenzmodulationsmodulators (320);
Intensitätsmodulation der frequenzmodulierten elektrischen Signale mit einem optischen Laser (330) in Gegenwart eines erfassten Trägersignals, um optische Signale bereitzustellen, und
Senden der optischen Signale auf einer optischen Faser;
Kombinieren der optischen Signale von jedem der frequenzmodulierten optischen Sender (300) bei einem passiven Kombinator (730), und
Senden der kombinierten optischen Signale auf einer einzigen Faser (735), wobei jedes der optischen Signale eine gemeinsame Wellenlänge aufweist.

2. Verfahren nach Anspruch 1, das ferner folgenden Schritt umfasst: Empfangen der kombinierten optischen Signale bei einem einzigen frequenzmodulierten optischen Empfänger (400) .

3. Verfahren nach Anspruch 2, das ferner folgende Schritte umfasst:
Umwandeln der kombinierten optischen Signale in ein kombiniertes frequenzmoduliertes elektrisches Signal bei dem frequenzmodulierten optischen Empfänger (400), und
Demodulieren des kombinierten frequenzmodulierten elektrischen Signals.

4. Verfahren nach Anspruch 1, das ferner folgenden Schritt umfasst: Verhindern, dass die frequenzmodulierten umgekehrten elektrischen Signale ohne das Vorhandensein eines Trägersignals intensitätsmodulierte optische Signale sind.

5. Verfahren nach Anspruch 1, das ferner den Schritt des Steuerns des optischen Lasers (330) über den Trägererfassungskreis (325) umfasst.

6. Verfahren nach Anspruch 1, das ferner den Schritt des Steuerns des Frequenzmodulationsmodulators über den Trägererfassungskreis (325) umfasst.

7. Verfahren nach Anspruch 1, wobei die umgekehrten elektrischen Signale mit einem vorbestimmten GHz-Signal frequenzmoduliert werden.

8. System (700) zum Senden von optischen Signalen im Signalblockmodus, wobei das System eine Vielzahl von frequenzmodulierten optischen Sendern (300) umfasst, wobei das System Folgendes umfasst:
bei jedem frequenzmodulierten optischen Sender (300) einen Trägererfassungskreis (325) zum Erfassen eines Trägersignals, das innerhalb von umgekehrten elektrischen Signalen gesendet wird;
einen Frequenzmodulationsmodulator (320) zur Frequenzmodulation der umgekehrten elektrischen Signale, und
einen optischer Laser (330) zur Intensitätsmodulation der frequenzmodulierten elektrischen Signale, wobei der optische Laser (330) die frequenzmodulierten elektrische Signale nur dann intensitätsmoduliert, wenn ein Trägersignal erfasst wird;
einen passiven Kombinator (730) für den Empfang der optischen Signale von jedem der Vielzahl von frequenzmodulierten optischen Sendern (300), und
eine einzige optische Faser (735) zum Senden der kombinierten optischen Signale.

9. System nach Anspruch 8, wobei die kombinierten optischen Signale, die auf der einzelnen Faser (735) gesendet werden, jeweils eine gemeinsame Wellenlänge aufweisen.

10. System nach Anspruch 8, das ferner Folgendes umfasst:
einen frequenzmodulierten optischen Empfänger (400) zum Empfangen der kombinierten optischen Signale, wobei die kombinierten optischen Signale eine gemeinsame Wellenlänge aufweisen.

11. System nach Anspruch 10, wobei der frequenzmodulierte optische Empfänger (400) Folgendes umfasst:
eine Photodiode (405) zum Umwandeln der kombinierten optischen Signale zurück in frequenzmodulierte elektrische Signale und
einen Frequenzmodulationsdemodulator (410) zum Demodulieren der frequenzmodulierten elektrischen Signale.

12. System nach Anspruch 8, wobei der Trägererfassungskreis (325) den optischen Laser (330) in Abhängigkeit von der Anwesenheit eines erfassten Trägersignals steuert.

13. System nach Anspruch 8, wobei der Trägererfassungskreis (325) den Frequenzmodulationsmodulator (320) in Abhängigkeit von der Anwesenheit eines erfassten Trägersignals steuert.

14. System zum Senden und Empfangen von optischen Signalen im Signalblockmodus, wobei das System eine Vielzahl von Verteilern umfasst und das System Folgendes umfasst:
bei jedem Verteiler mindestens einen frequenzmodulierten optischen Empfänger (400) zum Empfangen eines kombinierten optischen Signals, wobei der mindestens eine frequenzmodulierte optische Empfänger (400) Folgendes umfasst:
eine Photodiode (405) zum Umwandeln des kombinierten optischen Signals in ein frequenzmoduliertes elektrisches Signal und
einen Frequenzmodulationsdemodulator (410) zum Demodulieren des frequenzmodulierten elektrischen Signals.
eine Vielzahl von frequenzmodulierten optischen Sendern (300), die mit einem der Vielzahl von Verteilern gekoppelt sind, wobei jeder frequenzmodulierte optische Sender Folgendes umfasst:
einen Trägererfassungskreis (325) zum Erfassen eines Trägersignals, das innerhalb von umgekehrten elektrischen Signalen gesendet wird;
einen Frequenzmodulationsmodulator (320) zur Frequenzmodulation der umgekehrten elektrischen Signale, und
einen optischer Laser (330) zur Intensitätsmodulation der frequenzmodulierten elektrischen Signale, wobei der optische Laser (330) die frequenzmodulierten elektrische Signale nur dann intensitätsmoduliert, wenn ein Trägersignal erfasst wird; und
einen optischen Kombinator (730), der zwischen der Vielzahl von frequenzmodulierten optischen Sendern (300) und einem der Vielzahl von Verteilern gekoppelt ist, wobei der optische Kombinator die optischen Signale von jeder der Vielzahl von frequenzmodulierten Sendern (300) empfängt und die optischen Signale zur Übertragung über eine einzelne Faser (735) passiv kombiniert, wobei die kombinierten optischen Signale eine gemeinsame Wellenlänge aufweisen.

15. System nach Anspruch 14, wobei verhindert wird, dass die frequenzmodulierten elektrischen Signale ohne das Vorhandensein eines Trägersignals in optische Signale intensitätsmoduliert werden.

16. System nach Anspruch 14, wobei der Trägererfassungskreis (325) den optischen Laser (330) steuert.

17. System nach Anspruch 14, wobei verhindert wird, dass die umgekehrten elektrischen Signale ohne das Vorhandensein eines Trägersignals frequenzmoduliert werden.

18. System nach Anspruch 14, wobei der Trägererfassungskreis (325) den Frequenzmodulationsmodulator (320) steuert.

19. System nach Anspruch 14, wobei die umgekehrten elektrischen Signale mit einem vorbestimmten GHz-Signal frequenzmoduliert werden.

20. System nach Anspruch 14, wobei die umgekehrten elektrischen Signale in einem vorbestimmten umgekehrten Frequenzbereich gesendet werden.

## Revendications

1. Procédé permettant d'émettre des signaux optiques en mode rafale en provenance d'une pluralité d'émetteurs optiques à modulation de fréquence (300), le procédé comportant les étapes consistant à :
au niveau de chaque émetteur optique à modulation de fréquence (300), détecter un signal de porteuse dans des signaux électriques inverses par le biais d'un circuit de détection de porteuse (325) ;
effectuer une modulation de fréquence au niveau des signaux électriques inverses par le biais d'un modulateur de modulation de fréquence (320) ;
en présence d'un signal de porteuse détecté, effectuer une modulation d'intensité au niveau des signaux électriques à modulation de fréquence au moyen d'un laser optique (330) pour la mise en oeuvre de signaux optiques ; et
émettre les signaux optiques sur une fibre optique ;
au niveau d'un combinateur passif (730), combiner les signaux optiques en provenance de chacun des émetteurs optiques à modulation de fréquence (300) ; et
émettre les signaux optiques combinés sur une seule fibre (735), où les signaux optiques ont chacun une longueur d'onde commune.

2. Procédé selon la revendication 1, comportant par ailleurs l'étape consistant à recevoir les signaux optiques combinés au niveau d'un seul récepteur optique à modulation de fréquence (400).

3. Procédé selon la revendication 2, comportant par ailleurs les étapes consistant à :
au niveau du récepteur optique à modulation de fréquence (400), convertir les signaux optiques combinés en un signal électrique à modulation de fréquence combiné ; et
effectuer une démodulation au niveau du signal électrique à modulation de fréquence combiné.

4. Procédé selon la revendication 1, comportant par ailleurs l'étape consistant à, sans la présence d'un signal de porteuse, empêcher les signaux électriques inverses à modulation de fréquence de subir une modulation d'intensité à des fins de transformation en signaux optiques.

5. Procédé selon la revendication 1, comportant par ailleurs l'étape consistant à commander le laser optique (330) par le biais du circuit de détection de porteuse (325).

6. Procédé selon la revendication 1, comportant par ailleurs l'étape consistant à commander le modulateur de modulation de fréquence par le biais du circuit de détection de porteuse (325).

7. Procédé selon la revendication 1, dans lequel les signaux électriques inverses sont soumis à une modulation de fréquence avec un signal GHz prédéterminé.

8. Système (700) permettant d'émettre des signaux optiques en mode rafale, le système comprenant une pluralité d'émetteurs optiques à modulation de fréquence (300), le système comportant :
au niveau de chaque émetteur optique à modulation de fréquence (300), un circuit de détection de porteuse (325) permettant de détecter un signal de porteuse émis dans des signaux électriques inverses ;
un modulateur de modulation de fréquence (320) permettant d'effectuer une modulation de fréquence au niveau des signaux électriques inverses ; et
un laser optique (330) permettant d'effectuer une modulation d'intensité au niveau des signaux électriques à modulation de fréquence, dans lequel le laser optique (330) n'effectue une modulation d'intensité au niveau des signaux électriques à modulation de fréquence que lors de la détection d'un signal de porteuse ;
un combinateur passif (730) permettant de recevoir les signaux optiques en provenance de chacun de la pluralité d'émetteurs optiques à modulation de fréquence (300) ; et
une seule fibre optique (735) permettant d'émettre les signaux optiques combinés.

9. Système selon la revendication 8, dans lequel les signaux optiques combinés émis sur la seule fibre (735) ont chacun une longueur d'onde commune.

10. Système selon la revendication 8, comportant par ailleurs :
un récepteur optique à modulation de fréquence (400) permettant de recevoir les signaux optiques combinés, dans lequel les signaux optiques combinés ont une longueur d'onde commune.

11. Système selon la revendication 10, dans lequel le récepteur optique à modulation de fréquence (400) comporté :
une photodiode (405) permettant de convertir les signaux optiques combinés de retour en signaux électriques à modulation de fréquence ; et
un démodulateur de modulation de fréquence (410) permettant d'effectuer une démodulation au niveau des signaux électriques à modulation de fréquence.

12. Système selon la revendication 8, dans lequel le circuit de détection de porteuse (325) commande le laser optique (330) en fonction de la présence d'un signal de porteuse détecté.

13. Système selon la revendication 8, dans lequel le circuit de détection de porteuse (325) commande le modulateur de modulation de fréquence (320) en fonction de la présence d'un signal de porteuse détecté.

14. Système permettant d'émettre et de recevoir des signaux optiques en mode rafale, le système comportant une pluralité de concentrateurs, le système comportant :
au niveau de chaque concentrateur, au moins un récepteur optique à modulation de fréquence (400) permettant de recevoir un signal optique combiné, ledit au moins un récepteur optique à modulation de fréquence (400) comportant :
une photodiode (405) permettant de convertir le signal optique combiné en un signal électrique à modulation de fréquence ; et
un démodulateur de modulation de fréquence (410) permettant d'effectuer une démodulation au niveau du signal électrique à modulation de fréquence ;
une pluralité d'émetteurs optiques à modulation de fréquence (300) couplés à l'un parmi la pluralité de concentrateurs, chaque émetteur optique à modulation de fréquence comportant :
un circuit de détection de porteuse (325) permettant de détecter un signal de porteuse émis dans des signaux électriques inverses ;
un modulateur de modulation de fréquence (320) permettant d'effectuer une modulation de fréquence au niveau des signaux électriques inverses ; et
un laser optique (330) permettant d'effectuer une modulation d'intensité au niveau des signaux électriques à modulation de fréquence, dans lequel le laser optique (330) n'effectue une modulation d'intensité au niveau des signaux électriques à modulation de fréquence que lors de la détection d'un signal de porteuse ; et
un combinateur optique (730) couplé entre la pluralité d'émetteurs optiques à modulation de fréquence (300) et l'un parmi la pluralité de concentrateurs, le combinateur optique permettant de recevoir les signaux optiques en provenance de chacun de la pluralité d'émetteurs à modulation de fréquence (300) et de combiner passivement les signaux optiques à des fins d'émission sur une seule fibre (735), dans lequel les signaux optiques combinés ont une longueur d'onde commune.

15. Système selon la revendication 14, dans lequel, sans la présence d'un signal de porteuse, les signaux électriques à modulation de fréquence sont mis dans l'impossibilité de subir une modulation d'intensité à des fins de transformation en signaux optiques.

16. Système selon la revendication 14, dans lequel le circuit de détection de porteuse (325) commande le laser optique (330) .

17. Système selon la revendication 14, dans lequel, sans la présence d'un signal de porteuse, les signaux électriques inverses sont mis dans l'impossibilité de subir une modulation de fréquence.

18. Système selon la revendication 14, dans lequel le circuit de détection de porteuse (325) commande le modulateur de modulation de fréquence (320).

19. Système selon la revendication 14, dans lequel les signaux électriques inverses subissent une modulation de fréquence avec un signal GHz prédéterminé.

20. Système selon la revendication 14, dans lequel les signaux électriques inverses sont émis dans une plage de fréquence inverse prédéterminée.
